# EUROPEAN PATENT APPLICATION

(11) **EP 4 718 583 A1**
(43) Date of publication of application: **01.04.2026**
(21) Application number: 25186384.1
(22) Date of filing: 30.06.2025
(51) Int. Cl.: H01M 10/613, H01M 10/653, H01M 10/6556, H01M 10/6567, H01M 50/204, H01M 50/24, H01M 50/342, H01M 50/30

(54) **BATTERY PACK AND ELECTRIC DEVICE**

(30) Priority: 29.09.2024 CN 202411379851
(71) Applicant: Xiaomi EV Technology Co., Ltd., 100176 Beijing (CN)
(72) Inventor: CHEN, Haiyun, Beijing, 100176 (CN); ZHANG, Shangfu, Beijing, 100176 (CN)
(74) Representative: Hersina, Günter

(57) **Abstract**

The present invention relates to a battery pack (100) and an electric device (1000). The battery pack (100) includes a battery cell (10), an insulating member (20) and a supporting component (30), a clearance port (31) is formed in the supporting component (30) and is arranged corresponding to an anti-explosion valve (11) of the battery cell (10), the insulating member (20) is arranged between the battery cell (10) and the supporting component (30), the insulating member (20) includes a body (221) and a shielding portion (222) connected to the body (221), the shielding portion (222) is arranged corresponding to the clearance port (31), and at least part of the shielding portion (222) is arranged as being capable of turning over relative to the body (221) under an action of gas of the anti-explosion valve (11), so as to shield at least part of an inner wall (311) of the clearance port (31).

## Description

### TECHNICAL FIELD

The present invention relates to the technical field of battery packs, in particular to a battery pack and an electric device.

### BACKGROUND OF THE INVENTION

A battery pack, a core component of an electric device, is an apparatus configured to provide energy for an electric device. A battery cell is included inside a battery pack of a new energy automobile, an anti-explosion valve of the battery cell and a clearance port of a supporting component communicate with and face a bottom of a vehicle, thus it is guaranteed that when thermal runaway occurs to the battery cell, smoke and other substance are discharged towards the bottom of the vehicle, and life security of a driver and a passenger is ensured.

### SUMMARY OF THE INVENTION

An objective of the present invention is to provide a battery pack and an electric device, so as to at least partially solve the above technical problem.
For achieving the above objective, according to a first aspect of the present invention, a battery pack is provided. The battery pack includes a battery cell, an insulating member and a supporting component;
a clearance port is formed in the supporting component and is arranged corresponding to a valve port of an anti-explosion valve of the battery cell; and
the insulating member is arranged between the battery cell and the supporting component and includes a body and a shielding portion connected to the body, the shielding portion is arranged corresponding to the clearance port, and at least part of the shielding portion is arranged as being capable of turning over relative to the body under an action of gas of the anti-explosion valve, so as to shield at least part of an inner wall of the clearance port.

In some possible implementations, the shielding portion has a weak portion, structural strength of the weak portion is less than structural strength of other parts of the shielding potion, and/or, a melting point of the weak portion is lower than a melting point of the other parts of the shielding portion.

In some possible implementations, a projection of at least part of the weak portion is located within a projection of the clearance port in an axial direction of the clearance port.

In some possible implementations, the shielding portion further includes a first portion and a second portion, and the first portion is connected to the body; and
the second portion is connected to the first portion through the weak portion, so that the second portion may be separated from the first portion under an action of the gas of the anti-explosion valve, and the first portion may turn over relative to the body under an action of the gas of the anti-explosion valve, so as to shield at least part of the inner wall of the clearance port.

In some possible implementations, a shape of a profile defined by a peripheral edge of the second portion matches a shape of an axial section of the clearance port.

In some possible implementations, a minimum width of the first portion is greater than or equal to an axial length of the clearance port.

In some possible implementations, the shielding portion includes a plurality of turnover portions, the weak portion includes a plurality of secondary weak portions, and the plurality of turnover portions are connected through the corresponding secondary weak portions, so that the plurality of turnover portions may turn over relative to the body under an action of the gas of the anti-explosion valve, so as to shield at least part of the inner wall of the clearance port.

In some possible implementations, the plurality of secondary weak portions are uniformly arranged in a circumferential direction of the shielding portion.

In some possible implementations, the weak portion further includes a central weak portion, the plurality of secondary weak portions are connected to the central weak portion, and the central weak portion is arranged corresponding to a central axis of the valve port of the anti-explosion valve.

In some possible implementations, the weak portion includes an annular region and at least one separated region, and at least one separated region is arranged on a portion, defined by the annular region, of the shielding portion.

In some possible implementations, a projection of the clearance port is arranged as being capable of covering a projection of the valve port of the anti-explosion valve in an axial direction of the clearance port, and a projection of at least part of the weak portion is located within the projection of the valve port of the anti-explosion valve.

In some possible implementations, a projection of an end of the weak portion close to the body is located within the projection of the valve port of the anti-explosion valve in an axial direction of the clearance port.

In some possible implementations, the shielding portion extends into the clearance port, and the shielding portion does not exceed an end of the clearance port away from the battery cell in a case where thermal runaway does not occur to the battery cell.

In some possible implementations, the insulating member is constructed as an insulating member with a heat-resisting function.

In some possible implementations, volume resistivity of the insulating member is greater than or equal to 1×10¹³ (Ω×cm) under a test condition of a 500V direct current voltage and 60s power-on time; and/or,
a melting point of the insulating member is in a range from 1100°C to 1300°C; and/or,
a heat conductivity coefficient of the insulating member is in a range from 0.02W/(m×K) to 0.09W/(m×K).

In some possible implementations, a plurality of battery cells and a plurality of insulating members are arranged, the plurality of battery cells include a plurality of battery cell groups arranged in a first direction, and each battery cell group includes a plurality of battery cells arranged in a second direction;
the plurality of insulating members are arranged at intervals in the first direction, and each insulating member corresponds to a battery cell group; and
a plurality of shielding portions on each insulating member are arranged, the plurality of shielding portions are arranged at intervals on the body in the second direction, and each shielding portion on each insulating member corresponds to the valve port of the anti-explosion valve of one battery cell.

In some possible implementations, the body is arranged as being capable of being compressed under pressure.

In some possible implementations, the supporting component includes a liquid cooling plate located at a bottom of the battery cell, and the clearance port is formed in the liquid cooling plate.

According to a second aspect of the present invention, an electric device is provided. The electric device includes the aforementioned battery pack.

Through the aforementioned technical solution, the insulating member is arranged between the battery cell and the supporting component, and the shielding portion of the insulating member is arranged corresponding to the clearance port, so the shielding portion may shield at least part of the anti-explosion valve in a case where thermal runaway does not occur to the corresponding battery cell, and a risk of damaging the anti-explosion valve is reduced; and in a case where thermal runaway occurs to the corresponding battery cell, gas discharged by the battery cell through the anti-explosion valve may act on the shielding portion, so that at least part of the shielding portion may turn over relative to the body and shield at least part of the inner wall of the clearance port, at least part of the inner wall of the clearance port is separated through the shielding portion from conductive substance passing through the clearance port, thus a risk of occurrence of short circuit between the battery cell and the supporting component due to the fact that the conductive substance makes contact with the inner wall of the clearance port

### BRIEF DESCRIPTION OF DRAWINGS

Accompanying drawings here, which are incorporated in and constitute a part of the specification, illustrate embodiments consistent with the present invention, and, together with the specification, serve to explain principles of the present invention.
FIG. 1 is a schematic explosive view of a battery pack provided by an implementation of the present invention.
FIG. 2 is a schematic top view of an insulating member provided by some implementations of the present invention, where a weak portion with various structures is shown schematically.
FIG. 3 is a schematic partial top view of an insulating member provided by an implementation of the present invention.
FIG. 4 is a schematic partial top view of an insulating member provided by another implementation of the present invention.
FIG. 5 is a schematic partial top view of an insulating member provided by yet another implementation of the present invention.
FIG. 6 is a schematic partial top view of an insulating member provided by yet another implementation of the present invention.
FIG. 7 is a schematic partial bottom view of a supporting component provided by an implementation of the present invention.
FIG. 8 is a schematic partial bottom view of a battery cell provided by an implementation of the present invention, where an insulating member, a supporting component and an anti-explosion valve of the battery cell are shown.
FIG. 9 is a schematic structural space diagram of a battery cell provided by an implementation of the present invention.
FIG. 10 is a schematic partial sectional view of a battery pack provided by an implementation of the present invention.
FIG. 11 is a schematic partial enlarged view of a position A in FIG. 10.
FIG. 12 is a schematic partial top view of a supporting component provided by an implementation of the present invention, where a glue blocking portion is shown.
FIG. 13 is a block diagram of an electric device by an implementation of the present invention.

### - DETAILED DESCRIPTION OF THE INVENTION

Specific implementations of the present invention are described in detail below with reference to accompanying drawings. It is to be understood that the specific implementations described here are merely for describing and explaining the present invention instead of limiting the present invention.

In the present invention, in a case where no contrary statement is made, used direction words such as "upper, lower, top and bottom" are usually defined as upper, lower, top and bottom of a battery pack in a normal use state, and are merely intended to conveniently describe the present invention and simplify the description but not intended to indicate or imply that an apparatus or element referred to necessarily has a specific direction, or is necessarily constructed and operated in the specific direction, which is thus not understood as a limitation on the present invention. "Inner and outer" refers to inside and outside of a profile of a corresponding component, and besides, the terms used such as "first" and "second" are intended to distinguish an element from another element and do not have a sequence or significance.

In the description of the present invention, it needs to be further noted that unless otherwise specified and limited clearly, terms "arrange", "connect", "joint" and "mount" are to be understood in a broad sense, for example, it may be a fixed connection, or a detachable connection or an integrated connection; and it may be a direct connection or an indirect connection through an intermediate medium. Specific meanings of the above terms in the present invention may be understood by those ordinarily skilled in the art according to specific conditions.

In the related art, short circuit may be prone to occurring between the battery cell and the supporting component when the thermal runaway occurs to the battery cell, consequently, the battery pack has an insulation failure, a phenomenon of heat spread occurs to the battery pack, and safety of the battery pack is affected.

A research discovers that in the related art, a reason why short circuit may be prone to occurring between a battery cell and a supporting component in a case where thermal runaway occurs to the battery cell lies partially in that in a case where the thermal runaway occurs to the battery cell, conductive substance in the battery cell may be discharged along with gas through an anti-explosion valve, however, the conductive substance is prone to making contact with an inner wall of a clearance port when passing through the clearance port, consequently, the short circuit occurs between the battery cell and the supporting component, then a battery pack has an insulation failure, so a phenomenon of heat spread occurs to the battery pack, and security of the battery pack is affected.

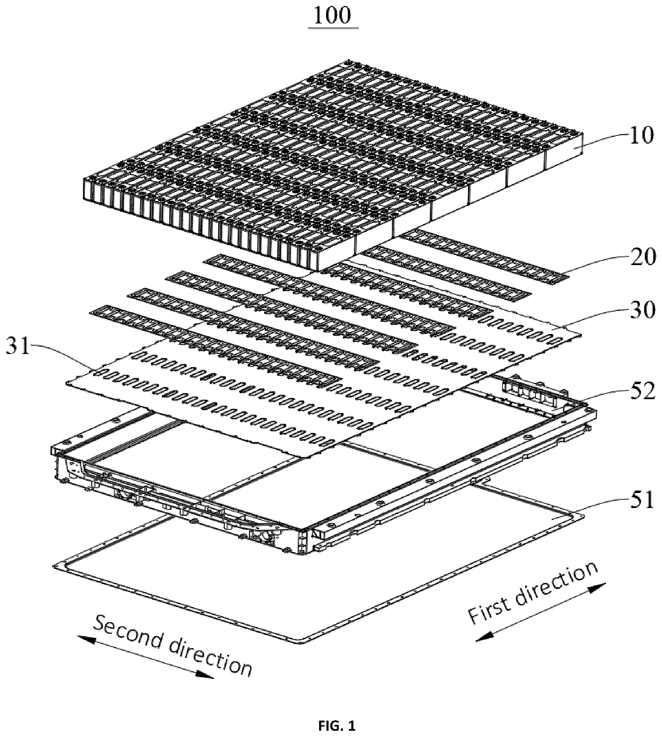

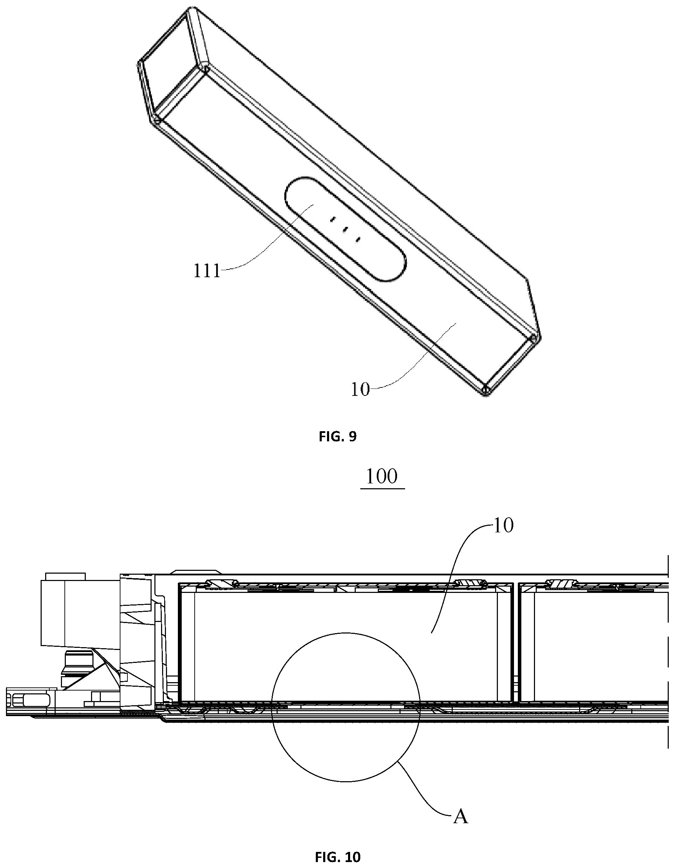

In view of this, as shown in FIG. 1 to FIG. 12, according to a first aspect of the present invention, a battery pack 100 is provided. The battery pack 100 includes a battery cell 10, an insulating member 20 and a supporting component 30, a clearance port 31 is formed in the supporting component 30 and is arranged corresponding to a valve port 111 of an anti-explosion valve of the battery cell 10, the insulating member 20 is arranged between the battery cell 10 and the supporting component 30, the insulating member 20 includes a body 221 and a shielding portion 222 connected to the body 221, the shielding portion 222 is arranged corresponding to the clearance port 31, and at least part of the shielding portion 222 is arranged as being capable of turning over relative to the body 221 under an action of gas of the anti-explosion valve 11, so as to shield at least part of an inner wall 311 of the clearance port 31.

Through the above technical solution, the insulating member 20 is arranged between the battery cell 10 and the supporting component 30, and the shielding portion 222 of the insulating member 20 is arranged corresponding to the clearance port 31, so in a case where thermal runaway does not occur to the corresponding battery cell 10, the shielding portion 222 may shield at least part of the anti-explosion valve 11, and a risk of damaging the anti-explosion valve 11 is reduced. In a case where the thermal runaway occurs to the corresponding battery cell 10, the battery cell 10 may act on the shielding portion 222 through gas discharged through the anti-explosion valve 11 (such as an effect of a high temperature or impact), so that at least part of the shielding portion 222 may turn over relative to the body 221, on the one hand, the insulating member 20 may be caused to form a through hole 2213 through which substance discharged by the anti-explosion valve 11 passes conveniently, on the other hand, the shielding portion 222 may be caused to shield at least part of the inner wall 311 of the clearance port 31, so at least part of the inner wall 311 of the clearance port 31 is separated through the shielding portion 222 from conductive substance passing through the clearance port 31, a risk of occurrence of short circuit between the battery cell 10 and the supporting component 30 due to a fact that the conductive substance makes contact with the inner wall 311 of the clearance port 31 is reduced better, then, a risk of occurrence of a heat spread phenomenon occurring to the battery pack 100 is reduced better, and security of the battery pack 100 is improved.

A position where the insulating member 20 is arranged may also play a role in blocking glue, namely, when glue for bonding the supporting component 30 and the battery cell 10 is applied to the supporting component 30, the insulating member 20 may stop the glue from flowing out from the clearance port 31, and thus waste of the glue is avoided better.

In addition to that the insulating member 20 plays various roles as described above, the insulating member 20 is arranged between the battery cell 10 and the supporting component 30, so a procedure of arranging an insulator between the battery cell 10 and the supporting component 30 may also be omitted, and thus manufacturing cost of the battery pack 100 is reduced better.

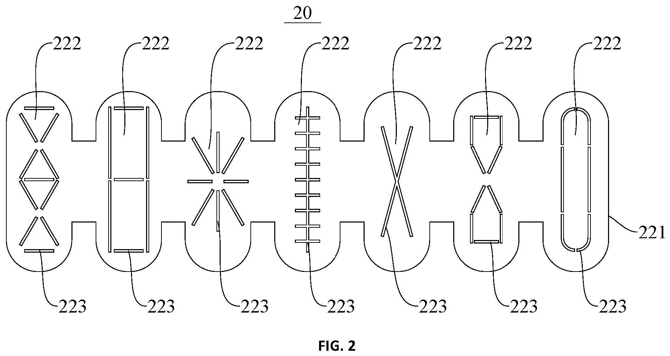

In order to make at least part of the shielding portion 222 turn over relative to the body 221 under an action of the gas of the anti-explosion valve 11, in some possible implementations, as shown in FIG. 2 to FIG. 6, the shielding portion 222 is provided with a weak portion 223, structural strength of the weak portion 223 is less than structural strength of other parts of the shielding potion 222, and/or, a melting point of the weak portion 223 is lower than a melting point of the other parts of the shielding portion 222. That is, a structure of the weak portion 223 may be fractured through impact of the gas discharged through the anti-explosion valve 11, and/or, the weak portion 223 is molten through a high temperature of the gas discharged through the anti-explosion valve 11, so various parts of the shielding portion 222 may be separated from a position where the weak portion 223 is located under an action of the gas of the anti-explosion valve 11, and then turn over relative to the body 221 to shield at least part of the inner wall 311 of the clearance port 31.

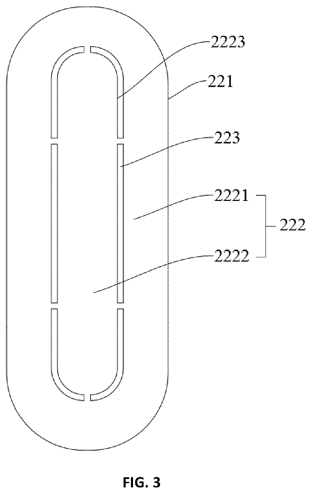

In the present invention, the weak portion 223 may be constructed as being of any appropriate structure, which is not limited by the present invention. As an implementation, as shown in FIG. 3 to FIG. 6, the weak portion 223 may be constructed as a notch, the notch has a simple structure and is convenient to machine, and especially when the insulating member 20 is foam, constructing the weak portion 223 as the notch may effectively reduce machining cost.

As other implementations of the present invention, the weak portion 223 may also be constructed as a nick, or a thickness of the weak portion 223 may be less than a thickness of the other parts of the shielding portion 222.

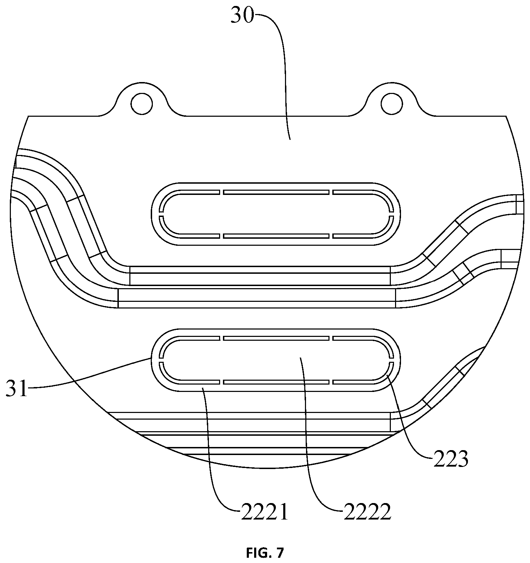

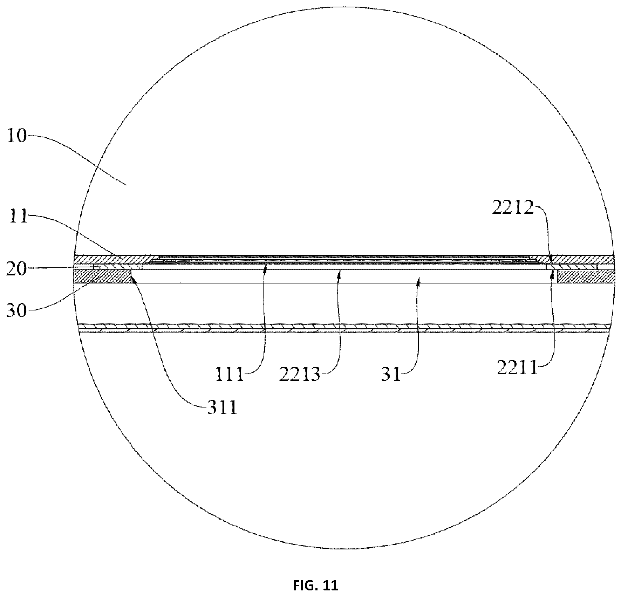

In some possible implementations, as shown in FIG. 7 and FIG.11, a projection of at least part of the weak portion 223 is located within a projection of the clearance port 31 in an axial direction of the clearance port 31. In this way, it is better guaranteed that after the weak portion 223 is damaged by the gas discharged by the anti-explosion valve 11, at least part of the shielding portion 222 may turn over relative to the body 221 to shield at least part of the inner wall 311 of the clearance port 31.

A construction of the shielding portion 222 is not limited by the present invention. As an implementation, as shown in FIG. 3 and FIG.11, the shielding portion 222 further includes a first portion 2221 and a second portion 2222, the first portion 2221 is connected to the body 221, the second portion 2222 is connected to the first portion 2221 through the weak portion 223, so that the second portion 2222 may be separated from the first portion 2221 under an action of the gas of the anti-explosion valve 11, and the first portion 2221 may turn over relative to the body 221 under an action of the gas of the anti-explosion valve 11, so as to shield at least part of the inner wall 311 of the clearance port 31.

In a case where the thermal runaway does not occur to the corresponding battery cell 10, the first portion 2221 and the second portion 2222 may jointly shield the anti-explosion valve 11, so that the shielding portion 222 shields and covers the anti-explosion valve 11 more thoroughly, and thus an effect of protecting the anti-explosion valve 11 by the shielding portion 222 is better improved. The second portion 2222 is connected to the first portion 2221 through the weak portion 223, so in a case where the thermal runaway occurs to the corresponding battery cell 10, the second portion 2222 may be separated from the first portion 2221 under an action of the gas of the anti-explosion valve 11, so as to reduce shielding for the anti-explosion valve 11 by the shielding portion 222 and then better reduce a risk of a secondary high pressure caused by obstructed discharging of the anti-explosion valve 11.

In the present invention, the second portion 2222 may be constructed as being in any appropriate shape, which is not limited by the present invention. As an implementation, as shown in FIG. 3, a shape of a profile defined by a peripheral edge 2223 of the second portion 2222 matches a shape of an axial section of the clearance port 31, for example, it is constructed as a kidney-shaped profile. In this way, in a case where the thermal runaway occurs to the corresponding battery cell 10, it is better guaranteed that the first portion 2221 may shield the inner wall 311 of the clearance port 31 in a larger area under a condition that the body 221 separated from the second portion 2222 may allow the gas of the anti-explosion valve 11 and other substance to smoothly pass, so that a risk of occurrence of short circuit between the battery cell 10 and the supporting component 30 due to the fact that the conductive substance makes contact with the inner wall of the clearance port 31 is further reduced better.

In order to increase an area, capable of being shielded by the first portion 2221, of the inner wall of the clearance port 31, as an implementation, a minimum width of the first portion 2221 may be greater than or equal to an axial length of the clearance port 31. A width direction of the first portion 2221 may be closely parallel to an axial direction of the clearance port 31 under an action of the gas of the anti-explosion valve 11, so the minimum width of the first portion 2221 is set to be greater than or equal to the axial length of the clearance port 31, and the first portion 2221 after turning over better shields the whole inner wall of the clearance port 31.

It may be understood that in a case where the thermal runaway does not occur to the battery cell 10, the width direction of the first portion 2221 may be parallel to or inclined from an axial direction of the clearance port 31.

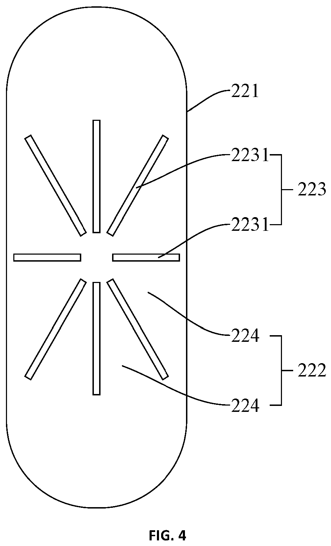

As another implementation of the shielding portion 222, as shown in FIG. 4 to FIG. 6, the shielding portion 222 includes a plurality of turnover portions 224, the weak portion 223 includes a plurality of secondary weak portions 2231, the plurality of turnover portions 224 are connected through the corresponding secondary weak portions 2231, for example, the plurality of secondary weak portions 2231 may form a shape of a Chinese character "mi" or "feng" or a cross on the shielding portion 222, and thus the plurality of turnover portions 224 may turn over relative to the body 221 under an action of the gas of the anti-explosion valve 11 to shield at least part of the inner wall 311 of the clearance port 31. Under an action of the gas of the anti-explosion valve 11, the plurality of turnover portions 224 may be separated along the secondary weak portions 2231 and turn over relative to the body 221.

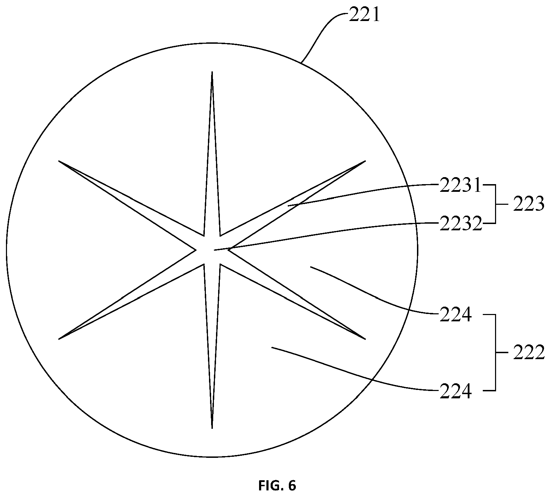

In some possible implementations, as shown in FIG. 6, the plurality of secondary weak portions 2231 may be uniformly arranged in a circumferential direction of the shielding portion 222, and may be arranged at equal angles in the circumferential direction of the shielding portion 222. In this way, the plurality of turnover portions 224 may be constructed as being of structures with uniform sizes, which facilitates machining, meanwhile, the plurality of turnover portions 224 may uniformly turn over, so that the plurality of turnover portions 224, after turning over, uniformly shield the inner wall of the clearance port 31, and thus a shielding capacity of the shielding portion 222 for the inner wall of the clearance port 31 is better improved.

In some possible implementations, as shown in FIG. 6, the weak portion 223 further includes a central weak portion 2232, the plurality of secondary weak portions 2231 are connected to the central weak portion 2232, and the central weak portion 2232 is arranged corresponding to a central axis of the valve port 111 of the anti-explosion valve, namely, a center portion of the central weak portion 2232 may coincide with a center line of the anti-explosion valve 11. In this way, the central weak portion 2232 may be separated from the plurality of turnover portions 224 under an action of the gas of the anti-explosion valve 11, which is conducive to making the plurality of turnover portions 224 turn over relative to the body 221 to shield the inner wall 311 of the clearance port 31. Besides, a size of the central weak portion 2232 may be adjusted as required, so adjustment for a size of each turnover portion 224 is implemented.

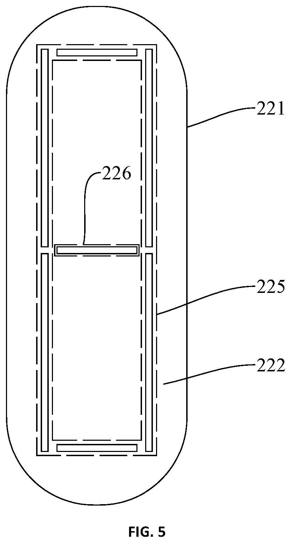

As yet another implementation of the shielding portion 222, as shown in FIG. 5, the weak portion 223 includes an annular region 225 and at least one separated region 226, and at least one separated region 226 is arranged on a portion, defined by the annular region 225, of the shielding portion 222. Under an action of the gas of the anti-explosion valve 11, the shielding portion 222 of this structure may be divided into a plurality of small pieces which are separated from the shielding portion 222, a designer may set the number of separated regions 226 as required, and thus the number and sizes of the small pieces into which the shielding portion 222 is divided are adjusted.

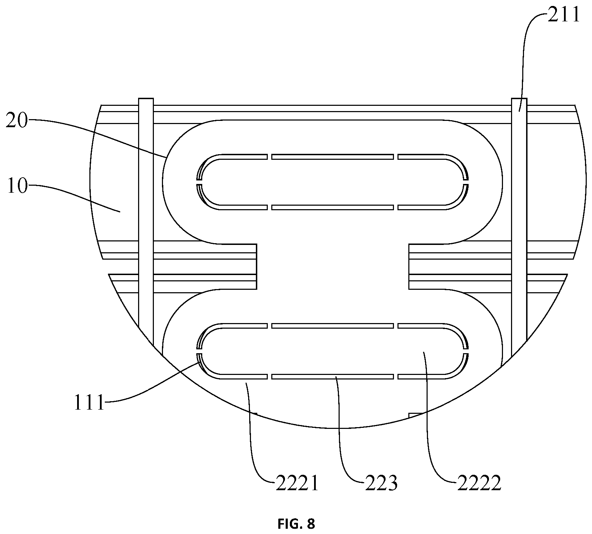

In some possible implementations, as shown in FIG. 8, a projection of the clearance port 31 is arranged as being capable of covering a projection of the valve port 111 of the anti-explosion valve in an axial direction of the clearance port 31, and a projection of at least part of the weak portion 223 is located within the projection of the valve port 111 of the anti-explosion valve. Arranging the projection of the clearance port 31 as being capable of covering the projection of the valve port 111 of the anti-explosion valve is conducive to preventing the supporting component 30 from blocking the gas discharged by the anti-explosion valve 11, and thus a risk of the secondary high pressure caused by obstructed discharging of the anti-explosion valve 11 is reduced better.

A projection of at least part of the weak portion 223 is located within the projection of the valve port 111 of the anti-explosion valve, and it is better guaranteed that the gas sprayed by the anti-explosion valve 11 may timely act on the weak portion 223, so that in a case where the thermal runaway occurs to the battery cell 10, the weak portion 223 may be timely damaged, which is conducive to making the shielding portion 222 more timely shield the inner wall 311 of the clearance port 31.

In some possible implementations, a projection of an end of the weak portion 223 close to the body 221 may be located within the projection of the valve port 111 of the anti-explosion valve in the axial direction of the clearance port 31. In this way, a direction action of the gas of the anti-explosion valve 11 may be exerted on each position of the weak portion 223, so that it is better guaranteed that in a case where the thermal runaway occurs to the battery cell 10, the weak portion 223 may be thoroughly damaged, which is conducive to making the turnover portion 222 turn over in place and more stably shield the inner wall 311 of the clearance port 31.

The present invention does not limit the width direction of the shielding portion 222. As an implementation, the shielding portion 222 may extend into the clearance port 31, and the shielding portion 222 does not exceed an end of the clearance port 31 away from the battery cell 10 in a case where thermal runaway does not occur to the battery cell 10.

As other implementations of the present invention, the width direction of the shielding portion 222 may be perpendicular to the axial direction of the clearance port 31, and the shielding portion 222 is located outside the clearance port 31.

In some possible implementations, the insulating member 20 may be constructed as an insulating member 20 with a heat-resisting function, in this way, it is conducive to avoiding melting of the insulating member 20 under a high temperature of the gas of the anti-explosion valve 11, thus avoiding a direct contact of the battery cell 10 and the supporting component 30 caused by melting of the insulating member 20, further avoiding diffusion of high-temperature substance, discharged by the anti-explosion valve 11, between the battery cell 10 and the supporting component 30 due to melting of the insulating member 20, and then improving isolation between adjacent anti-explosion valves 11 and avoiding occurrence of the heat spread phenomenon when the thermal runaway occurs.

In some possible implementations, as shown in FIG. 11, the body 221 may include a first side 2211 and a second side 2212 which are opposite to each other, the first side 2211 is fit with a top surface of the supporting component 30, the second side 2212 is fit with a bottom surface of the battery cell 10, a through hole 2213 whose two ends communicate with the first side 2211 and the second side 2212 respectively is formed in the body 221, and the shielding portion 222 is located in the through hole 2213. The first side 2211 is fit with the top surface of the supporting component 30, and the second side 2212 is fit with the bottom surface of the battery cell 10, so when the anti-explosion valve 11 is opened, the body 221 may play a good role in sealing, which is conducive to preventing the substance discharged by the anti-explosion valve 11 from diffusing between the supporting component 30 and the battery cell 10, thus guaranteeing that the substance discharged by the anti-explosion valve 11 enters the clearance port 31, and then avoiding occurrence of the heat spread phenomenon caused by the thermal runaway of part of the battery cell 10.

In the present invention, the insulating member 20 with appropriate parameters may be selected according to actual demands, which is not limited by the present invention, and in some possible implementations, under a test condition of a 500V direct current voltage and 60s power-on time, volume resistivity of the insulating member 20 is greater than or equal to 1×10¹³ (Ω×cm).

In some possible implementations, a melting point of the insulating member 20 is in a range from 1100°C to 1300°C.

In some possible implementations, a heat conductivity coefficient of the insulating member 20 is in a range from 0.02W/(m×K) to 0.090W/(m×K), and as an implementation, a heat conductivity coefficient of the insulating member 20 may be 0.098. Here, a thickness of the insulating member 20 may be adjusted, so that the insulating member 20 has an appropriate thermal insulation capacity.

The present invention does not limit a material of the insulating member 20, and as an implementation, the material of the insulating member 20 may include ceramic thermal-insulation foam. The ceramic thermal-insulation foam has good insulating performance, heat-resisting performance and chemical stability, so possibility of damaging a bottom of the battery cell 10 under conditions of vibration, impact, a high temperature and the like may be reduced effectively, and in a case where the thermal runaway occurs to the battery cell 10, the insulating member 20 may effectively insulate the valve port 111 of the adjacent anti-explosion valve, which is conducive to avoiding occurrence of the heat spread phenomenon when the thermal runaway occurs.

As other implementations of the present invention, the material of the insulating member 20 may also include a thermoplastic PPS base material, a continuous glass fiber composite material and the like.

The present invention does not limit the number of battery cells 10, the number of insulating members 20 and the number of shielding portions 222 on the body 221 of each insulating member 20. As an implementation, as shown in FIG. 1, a plurality of battery cells 10 and a plurality of insulating members 20 are arranged, the plurality of battery cells 10 include a plurality of battery cell groups arranged in a first direction, and each battery cell group includes a plurality of battery cells 10 arranged in a second direction; each insulating member 20 corresponds to a battery cell group; and a plurality of shielding portions 222 on each insulating member 20 may be arranged, the plurality of shielding portions 222 are arranged at intervals on the body 221 in the second direction, and each shielding portion 222 on each insulating member 20 corresponds to the valve port 111 of the anti-explosion valve of one battery cell 10. In this way, a mounting process of the body 221 on the supporting component 30 is better simplified, and mounting efficiency of the body 221 on the supporting component 30 is improved, namely, the plurality of shielding portions 222 may shield valve ports 111 of a plurality of anti-explosion valves in one-to-one correspondence by connecting one body 221 with the supporting component 30.

In some possible implementations, the body 221 may be arranged as being capable of being compressed under pressure. On the one hand, it is conducive to making the body 221 more closely fit with the bottom of the battery cell 10 and a top of the supporting component 30, thus preventing glue in a second region 42 from leaking towards a first region 41 as described below and further preventing the gas and the conductive substance sprayed by the anti-explosion valve 11 from being diffused towards the other battery cells 10, and on the other hand, a size of the body 221 in an interval direction of the battery cell 10 and the supporting component 30 may have space for flexible adjustment, which is thus conducive to making the body 221 match gaps of various battery cells 10 and the supporting components 30.

The present invention does not limit a specific structure of the supporting component 30, as shown in FIG. 1, the supporting component 30 may include a liquid cooling plate located at the bottom of the battery cell 10, and the clearance port 31 is formed in the liquid cooling plate. The liquid cooling plate may be arranged at the bottom of the battery cell 10 and configured to perform heat exchange with the battery cell 10, for example, cooling and heating the battery cell 10.

The liquid cooling plate may be arranged spaced from a bottom protection plate 51 of a battery housing to construct an exhaust passage, the exhaust passage may communicate with an exhaust valve (not shown in the figure) on the battery housing (such as a frame 52 of the battery housing), and in this way, in a case where the thermal runaway occurs to the battery cell 10, gas in the battery cell 10 may be discharged to the outside of the battery pack 100 via the anti-explosion valve 11, the through hole 2213 in the insulating member 20, the exhaust passage and the exhaust valve.

Here, the bottom protection plate 51 of the battery housing and the frame 52 of the battery housing described above may jointly constitute a tray of the battery housing.

It may be understood that the bottom of the battery cell 10 refers to a bottom of the battery cell 10 when the battery pack 100 is in a working state, for example, when the battery pack 100 is applied to a vehicle, the bottom of the battery cell 10 is a position of the battery cell 10 close to the ground, and a top of the battery cell 10 is a position of the battery cell 10 away from the ground.

In the present invention, when the insulating member 20 is arranged as an insulating heat-resisting member, the insulating member 20 has heat-resisting performance and chemical stability, possibility of damaging a bottom surface of the battery cell 10 under conditions of vibration, impact, the high temperature and the like may be effectively reduced, and use performance of the battery cell 10 is improved; and meanwhile, existence of the insulating member 20 may effectively isolate positions of the valves ports 111 of the respective adjacent anti-explosion valves, and occurrence of the heat spread phenomenon when the thermal runaway occurs is avoided.

Besides, the insulating member 20 has the insulating property, so a portion of a surface of the liquid cooling plate shielded by the insulating member 20 is not coated with an insulating layer (such as an epoxy coating), effective insulation between this position and the battery cell 10 may also be achieved, and cost is reduced better.

It may be understood that the portion of the surface of the liquid cooling plate shielded by the insulating member 20 may also be coated with the insulating layer (such as the epoxy coating), the insulating layer is protected through the insulating member 20, and the substance sprayed when the thermal runaway occurs to the battery cell 10 is prevented from damaging the insulating layer, which is thus conducive to reducing a risk of an insulation failure between the battery cell 10 and the liquid cooling plate caused by damage (such as scratch) to the insulating layer.

Besides, a research discovers that as the glue has fluidity, if the clearance port in the supporting component is not shielded when the glue is applied to the supporting component (such as the liquid cooling plate), the glue is prone to flowing out from the clearance port, waste of the glue is caused, the gas of the anti-explosion valve may even be stopped from passing through, but a process of applying the glue is difficult to control, a situation of excessively shielding the clearance port is prone to occurring during glue applying, and the battery cell and the supporting component cannot be effectively bonded.

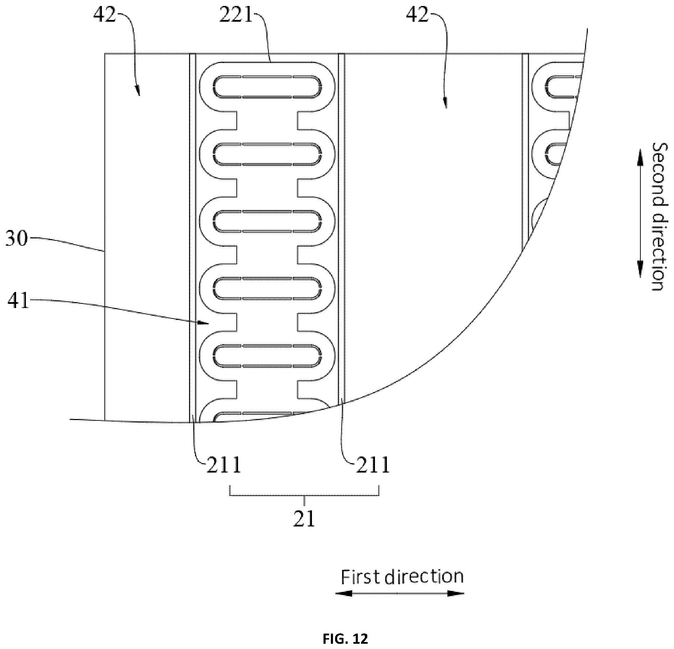

In view of this, as shown in FIG. 12, the insulating member 20 may further include a glue blocking portion 21, the glue blocking portion 21 is connected with the supporting component 30 and arranged as being capable of matching the supporting component 30 so as to define the first region 41 and the second region 42 which are isolated from each other, where the clearance port 31 communicates with the first region 41, and the second region 42 is used for being filled with the glue (such as heat-conducting structural glue) which connects the battery cell 10 and the supporting component 30.

Through the above technical solution, the first region 41 and the second region 42 which are isolated from each other may be defined through matching of the glue blocking portion 21 and the supporting component 30, and the clearance port 31 communicates with the first region 41, so by applying the glue to the second region 42, bonding between the battery cell 10 and the supporting component 30 may be implemented by using the glue in the second region 42. The glue blocking portion 21 may play a role in stopping the glue from flowing between the first region 41 and the second region 42, the glue applied to the second region 42 may be effectively prevented from flowing to the clearance port 31 located in the first region 41, which is thus conducive to avoiding occurrence of waste of the glue and avoiding occurrence of stopping the gas of the anti-explosion valve 11 from passing through when the glue flows out from the clearance port 31.

Moreover, the glue blocking portion 21 may also play a role in positioning the glue, which is conducive to preventing the glue from being mistakenly applied to the first region 41, so a process of applying the glue is more controllable, which is thus conducive to avoiding the situation of excessively receding the clearance port 31 during glue applying, and a failure in effective bonding between the battery cell 10 and the supporting component 30 is avoided, which is thus conducive to avoiding occurrence of reduction of whole rigidity of the battery pack 100 due to insecure bonding between the battery cell 10 and the supporting component 30.

The present invention does not limit a construction of the glue blocking portion 21. As an implementation, as shown in FIG. 12, the glue blocking portion 21 may include two secondary glue blocking portions 211, the two secondary glue blocking portions 211 are arranged in a spaced mode in the first direction, and opposite surfaces of the two secondary glue blocking portions 211 in the first direction and the supporting component 30 jointly define the first region 41.

The glue blocking portion 21 of this construction has a simple structure and is convenient to mount, and moreover, as spacing between the two secondary glue blocking portions 211 may be adjusted according to actual situations (such as a size of the clearance port 31), which is conducive to matching battery cells 10 and supporting components 30 in different specifications.

As other implementations of the present invention, the glue blocking portion 21 may also be constructed as a glue blocking annular boss, and an inner wall of the glue blocking annular boss and the supporting component 30 jointly define the first region 41.

The present invention neither limits the construction of the secondary glue blocking portions 211. As an implementation, as shown in FIG. 12, each secondary glue blocking portion 211 is constructed as a glue blocking strip extending in the second direction, and the first direction is perpendicular to the second direction. The first region 41 extending in the second direction may be jointly defined by the glue blocking strip extending in the second direction and the supporting component 30, so the glue blocking portion 21 of this construction may be adapted to a battery cell group with the valve ports 111 of the plurality of anti-explosion valves being distributed densely in the second direction and the supporting component 30 with the plurality of clearance ports 31 being distributed densely in the second direction.

As other implementations of the present invention, the glue blocking portion 21 may also be constructed as a glue blocking strip extending in a direction inclined from the first direction and the second direction.

It may be understood that as shown in FIG. 1, the first direction and the second direction may be a length direction and a width direction of the battery pack 100, the first direction may be an interval direction between a plurality of rows of clearance ports 31, and the second direction may be an interval direction between the plurality of clearance ports 31 in each row of clearance ports 31.

For conveniently mounting the body 221 on the supporting component 30, as an implementation, as shown in FIG. 12, in the first direction, the body 221 may be located between the two secondary glue blocking portions 211. Thus, the process of mounting the insulating member 20 on the supporting component 30 may be: two glue blocking strips may be first bonded to the supporting component 30, then the body 221 is bonded to the supporting component 30, and as the two secondary glue blocking portions 211 may play a role in positioning the body 221 in the first direction, a position of the body 221 in the first direction does not need to be adjusted, which is thus conducive to conveniently mounting the body 221 on the supporting component 30.

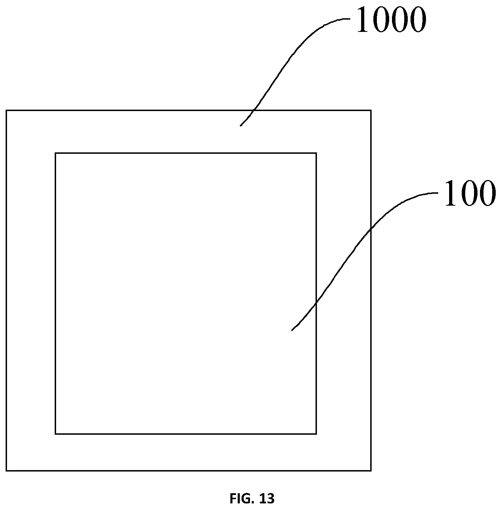

According to a second aspect of the present invention, as shown in FIG. 13, an electric device 1000 is provided. The electric device 1000 includes the aforementioned battery pack 100 and may further include an electric device body, and the battery pack 100 may be configured to supply power to the electric device body.

Here, the electric device 1000 may be a vehicle or may also be any other device suitable for adopting the battery pack 100, which is not limited by the present invention.

Implementations of the present invention are described in detail above with reference to the accompanying drawings, and however, the present invention is not limited to the specific details in the above implementations. Various simple variations may be made for the technical solutions of the present invention within the scope of the technical concept of the present invention, and these simple variations fall within the scope of protection of the present invention.

It needs to be additionally noted that various specific technical features described in the above specific implementations may be combined in any suitable mode without contradiction, and the present invention does not additionally describe various possible combination modes for avoiding unnecessary repetitions.

In addition, various different implementations of the present invention may also be combined in any way without violating the concept of the present invention, which are also regarded as the contents disclosed by the present invention.

## Claims

1. A battery pack (100), comprising a battery cell (10), an insulating member (20) and a supporting component (30);
a clearance port (31) is in the supporting component (30) and is arranged corresponding to a valve port (111) of an anti-explosion valve (11) of the battery cell (10); and
the insulating member (20) is between the battery cell (10) and the supporting component (30) and includes a body (221) and a shielding portion (222) connected to the body (211), the shielding portion (222) is arranged corresponding to the clearance port (31), and at least part of the shielding portion (222) is arranged to turn over relative to the body (221) under an action of gas of the anti-explosion valve (11), so as to shield at least part of an inner wall (311) of the clearance port (31).

2. The battery pack (100) according to claim 1, wherein the shielding portion (222) has a weak portion (223), structural strength of the weak portion (223) is less than structural strength of other parts of the shielding potion (222), and/or, a melting point of the weak portion (223) is lower than a melting point of the other parts of the shielding portion (222).

3. The battery pack (100) according to claim 2, wherein a projection of at least part of the weak portion (223) is within a projection of the clearance port (31) in an axial direction of the clearance port (31).

4. The battery pack (100) according to claim 2 or 3, wherein the shielding portion (222) further includes a first portion (2221) and a second portion (2222), and the first portion (2221) is connected to the body (221); and
the second portion (2222) is connected to the first portion (2221) through the weak portion (223), so that the second portion (2222) can be separated from the first portion (2221) under an action of the gas of the anti-explosion valve (11), and the first portion (2221) can turn over relative to the body (221) under an action of the gas of the anti-explosion valve (11), so as to shield at least part of the inner wall (311) of the clearance port (31);
optionally, wherein a shape of a profile defined by a peripheral edge (2223) of the second portion (311) matches a shape of an axial section of the clearance port (31);
optionally, wherein a minimum width of the first portion (2221) is greater than or equal to an axial length of the clearance port (31).

5. The battery pack (100) according to claim 2 or 3, wherein the shielding portion (222) includes a plurality of turnover portions (224), the weak portion (223) includes a plurality of secondary weak portions (2231), and the plurality of turnover portions (224) are connected through the corresponding secondary weak portions (2231), so that the plurality of turnover portions (224) can turn over relative to the body (221) under an action of the gas of the anti-explosion valve (11), so as to shield at least part of the inner wall (311) of the clearance port (31);
optionally, wherein the plurality of secondary weak portions (2331) are uniformly arranged in a circumferential direction of the shielding portion (222).

6. The battery pack (100) according to claim 5, wherein the weak portion (223) further includes a central weak portion (2232), the plurality of secondary weak portions (2231) are connected to the central weak portion (2232), and the central weak portion (2232) is arranged corresponding to a central axis of the valve port (111) of the anti-explosion valve (11).

7. The battery pack (100) according to claim 2 or 3, wherein the weak portion (223) includes an annular region (225) and at least one separated region (226), and at least one separated region (226) is on a portion, defined by the annular region (225), of the shielding portion (222).

8. The battery pack (100) according to any one of claims 2 to 7, wherein a projection of the clearance port (31) is arranged to cover a projection of the valve port (111) of the anti-explosion valve (11) in an axial direction of the clearance port (31), and a projection of at least part of the weak portion (223) is within the projection of the valve port (111) of the anti-explosion valve (11).

9. The battery pack (100) according to any one of claims 2 to 8, wherein a projection of an end of the weak portion (223) close to the body (221) is within a projection of the valve port (111) of the anti-explosion valve (11) in an axial direction of the clearance port (31).

10. The battery pack (100) according to any one of claims 1 to 9, wherein the shielding portion (222) extends into the clearance port (31), and the shielding portion (222) does not exceed an end of the clearance port (31) away from the battery cell (10) in a case where thermal runaway does not occur to the battery cell (10).

11. The battery pack (100) according to any one of claims 1 to 10, wherein the insulating member (20) is constructed as an insulating member with a heat-resisting function;
optionally, wherein volume resistivity of the insulating member (20) is greater than or equal to 1×10¹³ (Ω×cm) under a test condition of a 500V direct current voltage and 60s power-on time; and/or,
a melting point of the insulating member (20) is in a range from 1100°C to 1300°C; and/or,
a heat conductivity coefficient of the insulating member is in a range from 0.02W/(m×K) to 0.09W/(m×K).

12. The battery pack (100) according to any one of claims 1 to 11, wherein a plurality of battery cells (10) and a plurality of insulating members (20) are arranged, the plurality of battery cells (10) include a plurality of battery cell groups arranged in a first direction, and each battery cell group includes a plurality of battery cells (10) arranged in a second direction;
the plurality of insulating members (20) are arranged at intervals in the first direction, and each insulating member (20) corresponds to a battery cell group; and
a plurality of shielding portions (222) on each insulating member (20) are arranged, the plurality of shielding portions (222) are arranged at intervals on the body (221) in the second direction, and each shielding portion (222) on each insulating member (20) corresponds to the valve port (111) of the anti-explosion valve (11) of one battery cell (10).

13. The battery pack (100) according to any one of claims 1 to 12, wherein the body (221) is arranged to be compressed under pressure.

14. The battery pack (100) according to any one of claims 1 to 13, wherein the supporting component (30) includes a liquid cooling plate located at a bottom of the battery cell (10), and the clearance port (21) is in the liquid cooling plate.

15. An electric device (1000), comprising the battery pack (100) according to any one of claims 1 to 14.
